# FASCICULE DE BREVET EUROPEEN

(11) **EP 0 532 081 B1**
(45) Date de publication et mention de la délivrance du brevet: **14.01.1998**
(21) Numéro de dépôt: 92202620.8
(22) Date de dépôt: 28.08.1992
(51) Int. Cl.: A22C 9/00

(54) **Attendrisseur**
Vorrichtung zum Weichmachen
Tenderizing device

(30) Priorité: 10.09.1991 BE 9100840
(43) Date de publication de la demande: 17.03.1993
(73) Titulaire: Paulus, Daniel Stuart, B-1080 Bruxelles (BE)
(72) Inventeur: Paulus, Daniel Stuart, B-1080 Bruxelles (BE)
(74) Mandataire: Claeys, Pierre

(56) Documents cités:
- CH-A- 426 537
- DE-C- 667 109
- FR-A- 1 198 470
- FR-A- 1 547 443
- US-A- 1 459 445
- US-A- 2 109 434
- US-A- 2 464 634
- US-A- 2 537 003

## Description

La présente invention concerne un attendrisseur, en particulier pour de la viande de boucherie, dans lequel :
- un plateau est prévu pour recevoir une pièce de viande à attendrir,
- un dispositif mobile présente des moyens de support d'une grille destinée à immobiliser et maintenir la pièce de viande sur le plateau pendant les opérations d'attendrissage,
- des couteaux d'attendrissage sont destinés à coopérer avec la grille susdite et sont montés sur un support mobile, et
- la grille comprend, d'une part, un cadre rigide et, d'autre part, des barreaux fixés chacun, le long d'un même côté du cadre, par une de leurs extrémités à un support de manière à former ensemble un groupe de barreaux démontable du cadre.

On connaît déjà divers attendrisseurs du type susdit qui présentent tous le grand inconvénient de présenter des éléments entrant en contact avec la pièce de viande à attendrir, dont certains sont fixés à l'attendrisseur, soit à demeure soit par des moyens nécessitant de l'outillage dont ne dispose généralement pas l'utilisateur, et qui sont de ce fait beaucoup plus difficiles à nettoyer que les éléments amovibles de l'attendrisseur et impossibles à stériliser.

Le document DE-C-667109 montre un attendrisseur comprenant une grille formée par des lamelles amovibles et par un cadre dont la fixation à l'attendrisseur n'est pas explicitée.

Le document FR-A-1.547.443 montre un attendrisseur dont la grille présente des barreaux, reliés en un ensemble par une barre, et un cadre fixé à des tiges par des "oreilles" et par des "chapes" qui sont fixées au cadre par des écrous disposés dans des évidements réalisés dans la face du cadre pouvant entrer en contact avec de la viande à attendrir. La fixation des barreaux dans le cadre n'est pas explicitée.

Le document US-A-2.464.634 montre une partie d'attendrisseur dans lequel le cadre et la grille ne font qu'une pièce indémontable et compliquée à fabriquer. Cette pièce est fixée au support des couteaux d'attendrissage par des moyens en forme de tiges à accrocher dans des encoches et difficiles à manier, d'autant plus que des ressorts sont agencés entre cette pièce et le support de couteaux et agissent à l'encontre des mouvements de montage de la pièce de support.

L'invention a pour but de remédier à ces inconvénients et de procurer un attendrisseur dont, d'une part, le nombre d'éléments en contact avec les pièces de viande à attendrir est limité et, d'autre part, ces éléments sont aisément démontables sans l'aide d'outillage.

A cet effet, suivant l'invention,
- des moyens de liaison temporaire qui sont situés au-dessus de la grille à l'écart d'un contact avec la pièce de viande, au moins pendant une opération d'attendrissage, fixent de manière amovible la grille sur les moyens de support qui l'associent audit dispositif,
- le dispositif mobile précité et la grille qui y est associée sont agencés pour que seule la face de la grille tournée vers le plateau susdit entre en contact avec la pièce de viande à attendrir, et
- les moyens de liaison temporaire précités sont agencés de façon à pouvoir fixer en position d'attendrissage, en même temps, le groupe des barreaux et du support au cadre et le cadre aux moyens de support, ainsi que de façon à pouvoir les libérer l'un de l'autre.

D'autres détails et particularités de l'invention ressortiront des revendications secondaires et de la description des dessins qui sont annexés au présent mémoire et qui illustrent, à titre d'exemples non limitatifs, une forme de réalisation particulière de l'attendrisseur suivant l'invention.

La figure 1 est une vue latérale schématique en élévation, avec brisures partielles, de l'attendrisseur suivant l'invention.

La figure 2 montre, dans une vue semblable à celle de la figure 1, des étapes de démontage du cadre de l'attendrisseur suivant l'invention, par des traits mixtes.

La figure 3 illustre, avec brisures partielles, le démontage des barreaux de la grille suivant l'invention, la grille étant représentée en traits pleins en position d'attendrissage et en traits mixtes en position dégagée de l'attendrisseur.

La figure 4 montre dans une vue frontale schématique, avec brisures partielles, l'attendrisseur suivant l'invention, la grille étant retirée des patins et démontée et le flasque amovible de fixation des couteaux étant retiré.

Dans les différentes figures, les mêmes notations de référence désignent des éléments identiques ou analogues.

L'attendrisseur suivant l'invention et illustré aux dessins est désigné dans son ensemble par la référence 1. Cet attendrisseur 1 comporte généralement un plateau (non représenté) sur lequel est déposée une pièce de viande (non représentée) à attendrir, le plateau étant usuellement facilement détachable de l'attendrisseur pour être nettoyé et stérilisé.

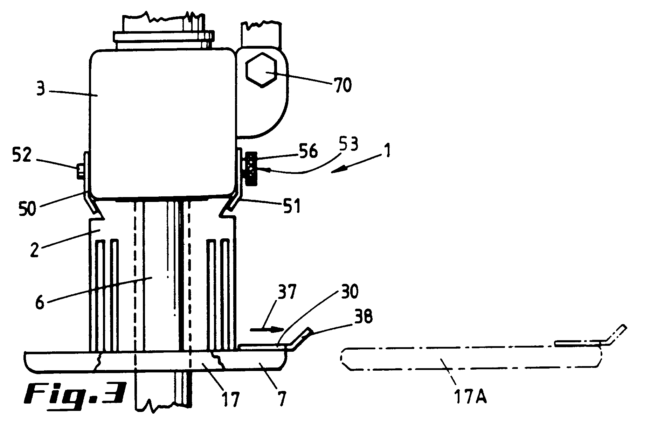

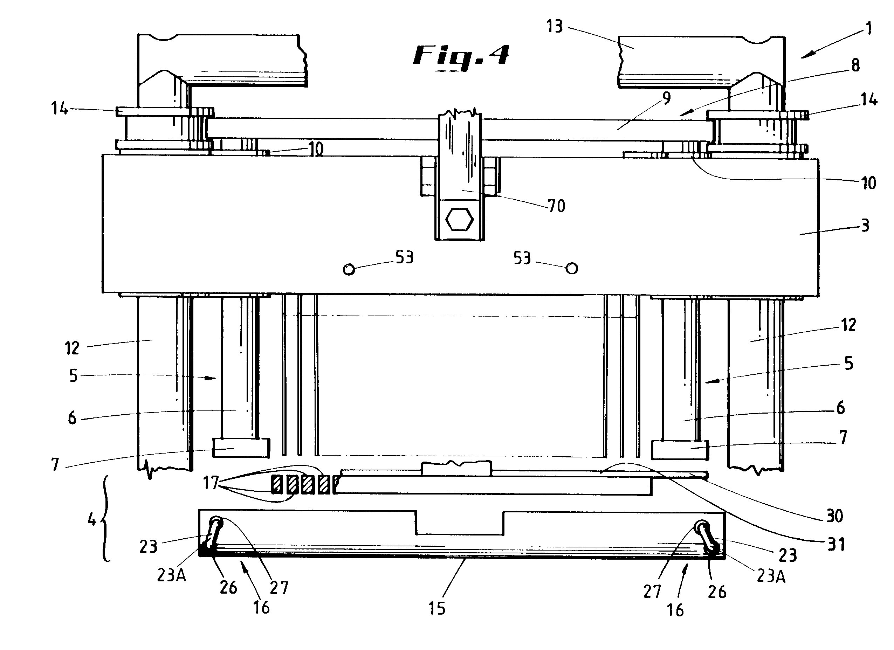

L'attendrisseur 1 comporte aussi des couteaux d'attendrissage 2 fixés par exemple sous un support mobile 3, ce dernier pouvant être actionné dans un mouvement de descente pour enfoncer les couteaux 2 dans la pièce de viande à attendrir ou dans un mouvement de montée pour en retirer les couteaux 2. Le support mobile 3 est guidé par exemple (figure 4) par deux colonnes 12 verticales et perpendiculaires au plateau et reliées l'une à l'autre par une entretoise 13.

Pour entre autres maintenir la pièce de viande sur le plateau lors de la montée du support mobile 3, il est usuel de disposer entre les couteaux 2 des barreaux formant une grille 4 qui prend appui sur la pièce de viande, en cours de descente du support mobile 3, avant que les couteaux 2 n'entrent dans la pièce de viande et qui quitte cette dernière après que ces mêmes couteaux 2 sont sortis de ladite pièce de viande.

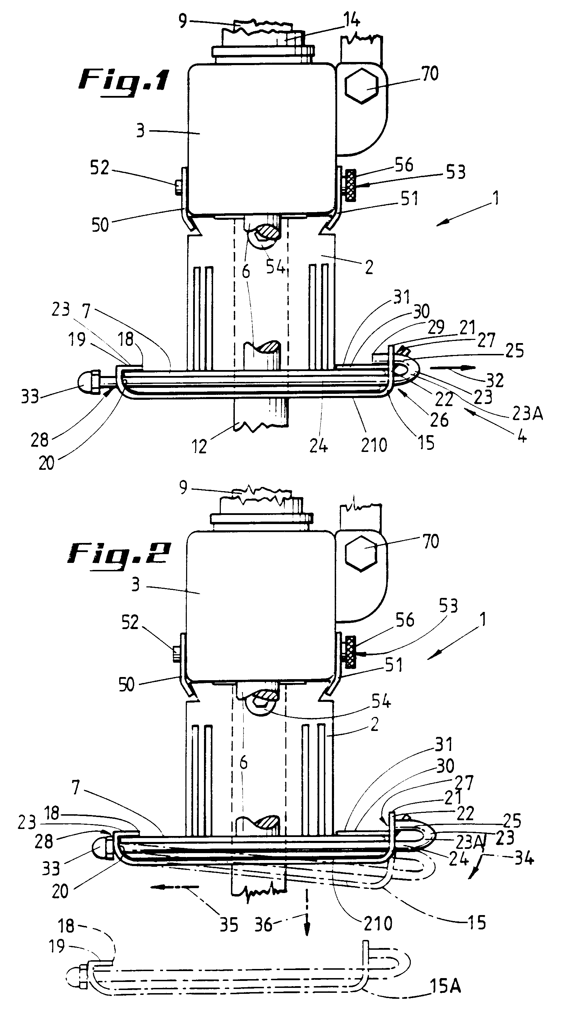

Pour guider et commander la grille 4 à partir par exemple des déplacements du support mobile 3, il est prévu un dispositif mobile 8 connu en soi qui présente des moyens de support 5 (figure 4) de ladite grille 4, ces moyens de support 5 étant représentés dans le présent exemple sous la forme de deux montants parallèles 6 (figures 1 à 4) qui comportent chacun avantageusement suivant l'invention un patin 7 fixé à leur extrémité inférieure pour constituer un appui adéquat et une fixation pour la grille 4. Les montants 6 peuvent être reliés entre eux par une traverse 9 et coulisser dans des buselures de guidage 10 agencées dans le support mobile 3. Les deux extrémités de la traverse 9 peuvent entrer chacune dans une gorge annulaire d'une bague de blocage et de butée connue 14 coulissant le long d'une colonne 12 correspondante. La position des bagues 14 à la figure 4 correspond à la position de repos de l'attendrisseur 1, la grille 4 n'étant pas en contact avec la pièce de viande. Les montants 6 sont en outre avantageusement parallèles aux colonnes 12.

La liaison entre la traverse 9 et les montants 6 est avantageusement réalisée par pinçage de ces derniers pour permettre par exemple un réglage de la distance entre plateau et patins 7 en libérant un ou les deux montants 6 et en les glissant à travers la traverse 9.

Suivant l'invention, la grille 4 est montée de manière amovible sous les montants 6, d'une façon qui est décrite ci-dessous.

Dans la position montée sous les montants 6, sous les patins 7 en vue d'un attendrissage, suivant l'invention la grille 4 s'étend entre la pièce de viande à attendrir et toute pièce constitutive du dispositif mobile 8 pour que seule la face inférieure de la grille 4 entre en contact avec ladite pièce de viande. A cet effet, la grille 4 s'étend par exemple sur toute la surface inférieure des patins 7 et éventuellement au-delà de cette surface. Donc, entre autres les montants 6 et les patins 7 restent à l'écart de la pièce de viande. De cette manière, lors d'un nettoyage et/ou d'une stérilisation, lorsque la grille 4 est détachée des moyens de support 5, on est assuré qu'aucun autre élément du dispositif mobile 8, non démontable de l'attendrisseur 1 sans utilisation d'un outillage adéquat, doive subir un nettoyage séparé.

Suivant l'invention, la grille 4 est fixée aux patins 7 par des moyens de liaison temporaires dont une forme de réalisation est décrite ci-dessous.

La grille 4 de l'attendrisseur suivant l'invention comporte un cadre 15 amovible et indéformable, par exemple en acier inoxydable convenant aux industries d'alimentation et aux nettoyages et stérilisations précités. Dans le cas de la forme de réalisation décrite, les deux côtés latéraux 16 du cadre 15, avantageusement rectangulaire et monté en position d'attendrissage, recouvrent chacun au moins complètement la surface inférieure du patin 7 correspondant pour en empêcher un contact avec la pièce de viande à attendrir.

Usuellement, la grille 4 comporte des barreaux 17 réalisés en matière synthétique pour éviter une usure prématurée des couteaux 2 qui passent entre ces barreaux 17 et qui peuvent entrer en contact avec eux (voir les figures 3 et 4).

Pour la liaison de la grille 4 aux patins 7, le cadre 15 comporte par exemple à proximité d'un de ses bords longitudinaux 18 des moyens d'accrochage réalisés par un pliage du cadre 15 sensiblement parallèlement audit bord longitudinal 18 de façon à présenter un rebord 19 rabattu sur la face supérieure de chaque patin 7 lorsque le cadre 15 est en position d'attendrissage. Ce rebord 19 peut être avantageusement continu d'un patin 7 à l'autre et présente un fond de pli 20.

Une extrémité de chaque barreau 17 peut être agencée pour pouvoir être logée entre le rebord 19 et une partie pleine du cadre 15 consécutive au rebord 19 et qui est située sous les patins 7 et s'étend de l'un à l'autre de ceux-ci. Ainsi, les barreaux 17 sont fixés par une de leurs extrémités au cadre 15 par un moyen de liaison 23 commun à celui qui fixe de manière amovible la grille 4 aux patins 7, ce moyen de liaison 23 étant porté par le cadre 15.

Pour la liaison de la grille 4 aux patins 7 du côté de l'autre bord longitudinal 21 du cadre 15, ce dernier est plié à proximité de ce bord 21 pour former une saillie 22 au-dessus des patins 7 lorsque le cadre 15 est en position d'attendrissage. Cette saillie 22 est avantageusement agencée à angle droit par rapport à la face 210 du cadre 15, qui peut entrer en contact avec la pièce de viande. Cette saillie 22 est formée à une distance telle que pour une extrémité d'un patin 7 dans le fond de pli 20, la saillie 22 soit sensiblement contre l'autre extrémité du même patin 7 pour localiser ainsi le cadre 15 par rapport aux patins.

Pour chaque patin 7, un élément coulissant 23A formé par une tige pliée en U à branches inégales 24 et 25 traverse la saillie 22 par deux perçages 26 et 27. Le perçage 26 le plus près de la face 210 est agencé pour que la longue branche 24 puisse passer le long de la face latérale externe du patin 7 correspondant et passer par un trou 28 dans le fond de pli 20 pour en ressortir à l'opposé du patin 7 par une extrémité, par exemple filetée et munie d'un écrou borgne 33, pour empêcher cette branche 24 de sortir du trou 28. La branche courte 25 traverse la saillie 22 par un perçage 27 agencé pour que cette branche courte 25 soit située au-dessus du patin 7 correspondant lorsqu'elle est enfoncée pour que son extremité 29 sorte du perçage 27 (figure 1). Chaque élément coulissant 23A constitue un autre moyen de liaison 23.

Le perçage 27 peut être disposé dans la saillie 22 pour que la branche courte 25 enfoncée suivant la figure 1 soit à fleur de la face supérieure du patin 7. Cependant, dans la forme de réalisation avantageuse de l'invention montrée aux figures 1 à 4, entre la branche courte 25 et la face supérieure du patin 7 il y a une aile 30 d'un support 31 fixé aux barreaux 17, par exemple pour réunir ceux-ci et les manipuler en groupe. Du fait de l'aile 30 ainsi agencée, le même élément coulissant 23A sert à la liaison simultanée du cadre 15 et du patin 7 correspondant ainsi que du cadre 15 et de l'ensemble des barreaux 17 formant la grille 4 proprement dite.

La figure 4 montre qu'à chaque patin 7 peut correspondre un élément coulissant 23A décrit ci-dessus. La figure 1 montre que lorsque la grille 4 est en position d'attendrissage, fixée aux patins 7, l'écrou borgne 33 à l'extrémité de la longue branche 24 est à une distance du cadre 15 choisie pour que, lorsque l'élément coulissant 23A est déplacé dans le sens de la flèche 32, à fond de course l'extrémité 29 soit à l'intérieur du perçage 27 (figure 2), libérant ainsi la face supérieure du patin et/ou l'aile 30.

De préférence, les patins 7 et les barreaux 17 ont même longueur et même épaisseur pour que ces éléments soient localisés l'un par rapport à l'autre dans le cadre 15 en position d'attendrissage, entre le fond de pli 20 et la saillie 22.

Des moyens de localisation de la grille 4 entre les patins 7 sont prévus par exemple par l'agencement respectif contre les patins 7 des barreaux 17 les plus proches de ceux-ci.

Un mode de démontage de la grille 4 est effectué au départ de la position d'attendrissage représentée à la figure 1. En déplaçant l'élément coulissant 23A suivant la flèche 32, on libère le cadre 15 pour le basculer suivant la flèche 34 comme cela est montré à la figure 2 et ensuite pour repousser le cadre 15 suivant la flèche 35 de la même figure 2 et dégager ainsi le rebord 19 du dessus des patins 7 et écarter le cadre 15 comme l'illustrent la flèche 36 et le dessin en traits mixtes du cadre en 15A.

Les barreaux 17 et leur support 31 peuvent avoir accompagné le cadre 15 lors du démontage expliqué ci-dessus. Les barreaux 17 peuvent cependant rester maintenus entre les couteaux 2 comme l'illustre la figure 3. Dans ce cas, il suffit par exemple de retirer dans le sens de la flèche 37 les barreaux à l'aide d'une poignée 38 qui fait partie du support 31 des barreaux 17. Cela est illustré par les barreaux en 17A à l'écart des couteaux 2.

L'homme du métier peut déterminer les étapes du montage des barreaux 17 et du cadre 15; il constate aisément l'absence avantageuse d'outils pour réaliser ces opérations.

Suivant les figures 1 à 3, les couteaux d'attendrissage 2 peuvent être fixés au support mobile 3 par un serrage entre des flasques fixe 50 et amovible 51 situés de part et d'autre des couteaux, le flasque 50 fixe tenant sur une face verticale du support mobile 3 par exemple par des vis 52 dont l'extrémité filetée 53 peut sortir par la face verticale opposée dudit support mobile 3 (figure 4). Les extrémités filetées 53 peuvent par exemple recevoir alors chacune un écrou moleté 56 pour fixer sans outil le flasque amovible 51 sur le support mobile 3.

La référence 70 désigne l'extrémité d'un dispositif de commande, connu en soi, pour le déplacement du support mobile 3 lors d'un attendrissage.

## Revendications

1. Attendrisseur, en particulier pour de la viande de boucherie, dans lequel :
- un plateau est prévu pour recevoir une pièce de viande à attendrir,
- un dispositif mobile (8) présente des moyens de support (5) d'une grille (4) destinée à immobiliser et maintenir la pièce de viande sur le plateau pendant les opérations d'attendrissage, et
- des couteaux d'attendrissage (2) sont destinés à coopérer avec la grille (4) susdite et sont montés sur un support mobile (3),
- la grille (4) comprend, d'une part, un cadre (15) rigide et, d'autre part, des barreaux (17) fixés chacun, le long d'un même côté du cadre (15), par une de leurs extrémités à un support (31) de manière à former ensemble un groupe de barreaux (17) démontable du cadre (15),
- le dispositif mobile (8) précité et la grille (4) qui y est associée sont agencés pour que seule la face de la grille (4) tournée vers le plateau susdit entre en contact avec la pièce de viande à attendrir, caractérisé en ce que :
- des moyens de liaison temporaire (23) qui sont situés au-dessus de la grille (4) à l'écart d'un contact avec la pièce de viande, au moins pendant une opération d'attendrissage, fixent de manière amovible la grille (4) sur les moyens de support (5) qui l'associent audit dispositif (8),
- les moyens de liaison temporaire (23) précités sont agencés de façon à pouvoir fixer en position d'attendrissage, en même temps, le groupe des barreaux (17) et du support (31) au cadre (15) et le cadre (15) aux moyens de support (5), ainsi que de façon à pouvoir les libérer l'un de l'autre.

2. Attendrisseur suivant la revendication 1, caractérisé en ce que les moyens de support (5) de la grille (4) comprennent deux montants parallèles (6), une pièce d'appui, tel qu'un patin (7), étant fixée à l'extrémité de chacun des montants (6) qui est la plus proche de la grille (4) et sur laquelle celle-ci s'appuie et est fixée, pour s'étendre sensiblement parallèlement au plateau, à l'aide des moyens de liaison temporaires (23).

3. Attendrisseur suivant la revendication 2, caractérisé en ce que la face de chacun des patins (7) tournée vers le plateau est totalement couverte par le cadre (15) précité.

4. Attendrisseur suivant l'une ou l'autre des revendications 2 et 3, caractérisé en ce que les moyens de liaison (23) susdits de la grille (4) aux patins (7) sont portés par le cadre (15) précité.

5. Attendrisseur suivant l'une quelconque des revendications 2 à 4, caractérisé en ce que les moyens de liaison (23) communs de la grille (4) aux patins (7) et dudit groupe de barreaux (17) au cadre (15) sont constitués par des moyens d'accrochage (19), prévus sur le cadre (15) à proximité d'un des bords (18) de ce dernier et destinés à coopérer avec au moins un des patins (7) et avec la grille (4), au moins une saillie (22) s'étendant le long du bord (21) du cadre (15) opposé à celui portant les moyens d'accrochage (19) et étant destinée à prendre appui sur au moins un patin (7), et par au moins un élément coulissant (23) supporté et guidé dans au moins la saillie (22) précitée et agencé pour prendre appui sur le patin (7) afin d'immobiliser le cadre (15) précité par rapport auxdits patins (7).

6. Attendrisseur suivant la revendication 5, caractérisé en ce que l'élément coulissant (23) prend appui simultanément sur un des patins (7) et sur la grille (4) afin de fixer cette dernière au cadre (15).

## Claims

1. Tenderiser, in particular for butcher's meat, in which:
- a plate is provided for receiving a piece of meat to be tenderised,
- a movable device (8) has support means (5) for a grid (4) designed to immobilise the piece of meat and hold it in place on the plate during the tenderising operations, and
- tenderising knives (2) are designed to cooperate with the aforementioned grid (4) and are mounted on a movable support (3),
- the grid (4) comprises, on the one hand, a rigid frame (15) and, on the other hand, bars (17) each fixed, along the same side of the frame (15), by one of their ends to a support (31) so as to form together a group of bars (17) able to be removed from the frame (15),
- the aforementioned movable device (8) and the grid (4) associated therewith are so arranged that only the face of the grid (4) facing the aforementioned plate makes contact with the piece of meat to be tenderised,
characterised in that:
- temporary connection means (23) which are situated above the grid (4), out of contact with the piece of meat, at least during a tenderising operation, removably fix the grid (4) on the support means (5) which associate it with the said device (8),
- the aforementioned temporary connection means (23) are so arranged as to be able to fix in the tenderising position, simultaneously, the group consisting of the bars (17) and support (31) to the frame (15) and the frame (15) to the support means (5), in such a way as to be able to free them from each other.

2. Tenderiser according to Claim 1, characterised in that the support means (5) for the grid (4) comprise two parallel uprights (6), a support piece, such as a runner (7), being fixed to the end of each of the uprights (6) closest to the grid (4) and on which the latter bears and is fixed, so as to extend substantially parallel to the plate, by means of the temporary connection means (23).

3. Tenderiser according to Claim 2, characterised in that the face of each of the runners (7) facing the plate is totally covered by the aforementioned frame (15).

4. Tenderiser according to one or other of Claims 2 and 3, characterised in that the above-mentioned means (23) of connecting the grid (4) to the runners (7) are carried by the aforementioned frame (15).

5. Tenderiser according to any one of Claims 2 to 4, characterised in that the common means (23) of connecting the grid (4) to the runners (7) and the said group of bars (17) to the frame (15) consist of attachment means (19), provided on the frame (15) rear one of the edges (18) of the latter and designed to cooperate with at least one of the runners (7) and with the grid (4), at least one projection (22) extending along the edge (21) of the frame (15) opposite the one carrying the attachment means (19) and being designed to bear on at least one runner (7), and by at least one sliding element (23) supported and guided in at least the aforementioned projection (22) and arranged so as to bear on the runner (7) so as to immobilise the aforementioned frame (15) with respect to the said runners (7).

6. Tenderiser according to Claim 5, characterised in that the sliding element (23) bears simultaneously on one of the runners (7) and on the grid (4) so as to fix the latter to the frame (15).

## Patentansprüche

1. Weichmachungsvorrichtung, insbesondere für Schlachtfleisch, in der:
- eine Platte vorgesehen ist, die ein weichzumachendes Fleischstück aufnehmen kann,
- eine bewegliche Einrichtung (8) Mittel (5) zum Tragen eines Gitters (4) aufweist, das dazu bestimmt ist, das Fleischstück auf der Platte während der Weichmachungsvorgänge unbeweglich zu machen und zu halten, und
- Weichmachungsmesser (2) dazu bestimmt sind, mit dem obengenannten Gitter (4) zusammenzuwirken, und an einem beweglichen Träger (3) angebracht sind,
- das Gitter (4) einerseits einen starren Rahmen (15) und andererseits Gitterstäbe (17) enthält, die jeweils mit einem ihrer Enden längs derselben Seite des Rahmens (15) an einem Träger (31) befestigt sind, um so zusammen eine vom Rahmen (15) abnehmbare Gitterstabgruppe (17) zu bilden,
- die obengenannte bewegliche Vorrichtung (8) und das Gitter (4), das ihr zugeordnet ist, in der Weise angeordnet sind, daß nur die zu der Platte gewandte Fläche des Gitters (4) mit dem weichzumachenden Fleischstück in Kontakt gelangt,
dadurch gekennzeichnet, daß;
- Mittel (23) für eine vorübergehende Verbindung, die sich über dem Gitter (4) in einem Abstand von einem Kontakt mit dem Fleischstück befinden, das Gitter (4) wenigstens während eines Weichmachungsvorgangs lösbar an den Trägermitteln (5) befestigen, welche es mit der Vorrichtung (8) verbinden,
- die obengenannten Mittel für die vorübergehende Verbindung so beschaffen sind, daß sie in der Weichmachungsstellung zugleich die Gruppe aus den Gitterstäben (17) und aus dem Träger (31) am Rahmen (15) sowie den Rahmen (15) an den Trägermitteln (5) befestigen können, und ferner so beschaffen sind, daß sie sie voneinander lösen können.

2. Weichmachungsvorrichtung nach Anspruch 1, dadurch gekennzeichnet, daß die Mittel (5) zum Tragen des Gitters (4) zwei parallele Streben (6) enthalten, wobei ein Abstützteil wie etwa eine Fußplatte (7) an dem auf seiten des Gitters (4) befindlichen Ende jeder Strebe (6) befestigt ist, an dem sich dieses abstützt und an dem dieses mit Hilfe der vorübergehenden Verbindungsmittel (23) in der Weise befestigt ist, daß es sich im wesentlichen parallel zur Platte erstreckt.

3. Weichmachungsvorrichtung nach Anspruch 2, dadurch gekennzeichnet, daß die zur Platte gewandte Fläche jeder Fußplatte (7) vom obengenannten Rahmen (15) vollständig abgedeckt ist.

4. Weichmachungsvorrichtung nach einem der Ansprüche 2 und 3, dadurch gekennzeichnet, daß die obengenannten Mittel (23) für die Verbindung des Gitters (4) mit den Fußplatten (7) vom obengenannten Rahmen (15) getragen werden.

5. Weichmachungsvorrichtung nach irgendeinem der Ansprüche 2 bis 4, dadurch gekennzeichnet, daß die gemeinsamen Mittel (23) für die Verbindung des Gitters (4) mit den Fußplatten (7) und der Gitterstabgruppe (17) mit dem Rahmen (15) durch Mitnehmermittel (19) gebildet sind, die am Rahmen (15) in der Nähe eines seiner Ränder (18) vorgesehen und dazu bestimmt sind, mit wenigstens einer der Fußplatten (7) und mit dem Gitter (4) zusammenzuwirken, wobei längs des Randes (21) des Rahmens (15) gegenüber jenem, der die Mitnehmermittel (19) trägt, wenigstens ein Vorsprung (22) vorhanden ist, der dazu bestimmt ist, sich an wenigstens einer Fußplatte (7) abzustützen, und durch wenigstens ein Gleitelement (23) gebildet sind, das wenigstens von dem obengenannten Vorsprung (22) getragen wird, in diesem geführt wird und so beschaffen ist, daß es sich auf der Fußplatte (7) abstützt, um den obengenannten Rahmen (15) in bezug auf die Fußplatten (7) unbeweglich zu machen.

6. Weichmachungsvorrichtung nach Anspruch 5, dadurch gekennzeichnet, daß sich das Gleitelement (23) zugleich an einer der Fußplatten (7) und am Gitter (4) abstützt, um dieses letztere am Rahmen (15) zu befestigen.
